(19) **Europäisches Patentamt European Patent Office Office européen des brevets**

(11) **EP 4 625 206 A1**

(12) **EUROPEAN PATENT APPLICATION**
published in accordance with Art. 153(4) EPC

(43) Date of publication:
01.10.2025 Bulletin 2025/40

(21) Application number: 24824384.2

(22) Date of filing: 14.09.2024

(51) International Patent Classification (IPC):
$G06F\ 16/583^{(2019.01)}$     $G06T\ 5/70^{(2024.01)}$
$G06V\ 40/12^{(2022.01)}$

(86) International application number:
PCT/IB2024/058958

(87) International publication number:
WO 2025/168990 (14.08.2025 Gazette 2025/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 08.02.2024 CN 202410178287

(71) Applicant: HUIKE (SINGAPORE) HOLDING
PTE.LTD.
Singapore 117586 (SG)

(72) Inventors:
• NI, Fangyi
Shenzhen
Guangdong 117586 (CN)
• HU, Miantao
Shenzhen
Guangdong 117586 (CN)
• MIN, Jingdan
Shenzhen
Guangdong 117586 (CN)

(74) Representative: Metida
Gyneju str. 16
01109 Vilnius (LT)

(54) **IMAGE PROCESSING METHOD AND APPARATUS, CHIP, STORAGE MEDIUM, AND ELECTRONIC DEVICE**

(57) The present disclosure provides an image processing method and apparatus, a chip, a storage medium and an electronic device. The method includes: selecting a matched empty sampling image matched with an empty sampling image to be detected from an empty sampling image library to obtain an image to be determined; and in a case that the image to be determined has no shading and/or in a case that the image to be determined has shading but meets a preset condition, adding the empty sampling image to be detected to the empty sampling image library. According to embodiments of the present disclosure, the accuracy of fingerprint identification can be improved through the empty sampling image library.

EP 4 625 206 A1

```
┌────────────────────────────────────────────────────────┐
│   An empty sampling image to be detected is acquired     │──  S101
└────────────────────────────────────────────────────────┘
                          │
                          ▼
┌────────────────────────────────────────────────────────┐
│  A matched empty sampling image matched with the empty   │
│  sampling image to be detected is selected from an empty  │
│  sampling image library, and the empty sampling image to │──  S102
│  be detected is subjected to fixed noise removal by the   │
│  matched empty sampling image to obtain an image to be   │
│                      determined                          │
└────────────────────────────────────────────────────────┘
                          │
                          ▼
┌────────────────────────────────────────────────────────┐
│  When the image to be determined has no shading, the     │
│  empty sampling image to be detected is added to the      │
│  empty sampling image library; and/or when the image to  │──  S103
│  be determined has shading but meets a preset             │
│  condition, the empty sampling image to be detected is    │
│  added to the empty sampling image library, where the    │
│  empty sampling image library supports the correction of  │
│  the fingerprint image                                   │
└────────────────────────────────────────────────────────┘
```

FIG. 1

## Description

The present disclosure claims priority to Chinese Patent Application No. 2024101782870, filed with the China National Intellectual Property Administration (CNIPA) on February 8, 2024 and entitled "IMAGE PROCESSING METHOD AND APPARATUS, CHIP, STORAGE MEDIUM AND ELECTRONIC DEVICE", which is hereby incorporated herein by reference in its entirety.

TECHNICAL FIELD

The present disclosure relates to the technical field of fingerprint identification, and in particular to an image processing method and apparatus, a chip, a storage medium and an electronic device.

BACKGROUND

At present, an ultrasonic fingerprint sensor (a chip) has a fixed signal (that is, fixed noise) during image acquisition, the fixed signal is superimposed with a fingerprint signal, so that it is difficult to restore fingerprint lines by preprocessing, where the fixed signal includes fringe noise and fixed bad pixels generated at the edge of the image by diffraction of sound wave. In the related art, the fixed signal is usually acquired by a method for empty sampling a base (an image emptily sampled by the sensor, that is, the empty sampling image, which may include fixed fringe noise at the edge of an ultrasonic array and fixed line noise of an electronic device), so that the fixed signal is removed based on the empty sampling image, and the fingerprint lines are restored. However, in the related art, when the empty sampling image (that is, empty sampling base) is acquired, it is easily influenced by the acquisition time and the screen status of the electronic device, resulting in that the empty sampling image may include a shading signal, so that the shading signal will be superimposed on the fingerprint lines in base correction (that is, the fixed noise is removed through the empty sampling image) and the restored fingerprint image is abnormal. Based on this, how to perform image processing to reduce the influence of the shading signal on the fingerprint image in the process of removing the fixed noise so as to improve the accuracy of fingerprint identification has not yet had a good solution.

SUMMARY

In view of this, embodiments of the present disclosure provide an image processing method and apparatus, a chip, a storage medium and an electronic device, so as to solve the problem that an empty sampling image obtained by the related art may include a strong shading signal, thereby affecting the correction effect of a fingerprint image. That is, according to the embodiments of the present disclosure, the empty sampling image to be detected can be subjected to image processing through a matched empty sampling image matched with the empty sampling image to be detected in an empty sampling image library so as to obtain a high-accuracy image to be determined; shading detection of the empty sampling image to be detected is achieved by the image to be determined, so that an empty sampling image without shading or with a small shading signal (that is, an empty sampling image to be detected when the image to be determined has no shading and/or the image to be determined has shading but meets a preset condition) is acquired, and the empty sampling image library is updated; then the empty sampling image in the empty sampling library may be the empty sampling image without shading or with the small shading signal; and the empty sampling image library supports the correction of the fingerprint image, so that the correction effect of the fingerprint image can be improved by the empty sampling image in the empty sampling image library, and the influence of the shading signal on the fingerprint image in the process of removing fixed noise is reduced, thereby improving the accuracy of fingerprint identification.

According to one aspect of the embodiments of the present disclosure, an image processing method is provided. The method includes:

acquiring an empty sampling image to be detected;
selecting a matched empty sampling image matched with the empty sampling image to be detected from an empty sampling image library, and performing fixed noise removal on the empty sampling image to be detected by the matched empty sampling image to obtain an image to be determined; and
when the image to be determined has no shading, adding the empty sampling image to be detected to the empty sampling image library; and/or when the image to be determined has shading but meets a preset condition, adding the empty sampling image to be detected to the empty sampling image library, where the empty sampling image library supports the correction of a fingerprint image.

According to another aspect of the embodiments of the present disclosure, an image processing apparatus is provided. The apparatus includes:

an acquisition unit, configured to acquire an empty sampling image to be detected;

a processing unit, configured to select a matched empty sampling image matched with the empty sampling image to be detected from an empty sampling image library, and perform fixed noise removal on the empty sampling image to be detected by the matched empty sampling image to obtain an image to be determined; and

the processing unit, further configured to: when the image to be determined has no shading, add the empty sampling image to be detected to the empty sampling image library; and/or when the image to be determined has shading but meets a preset condition, add the empty sampling image to be detected to the empty sampling image library, where the empty sampling image library supports the correction of a fingerprint image.

According to another aspect of the embodiments of the present disclosure, a chip is provided. The chip is located in an electronic device, and the chip is configured to perform the method described above.

According to another aspect of the embodiments of the present disclosure, an electronic device is provided. The electronic device includes one or more processors, and one or more memories for storing programs, where the programs include instructions, and when the instructions are executed by the one or more processors, the one or more processes perform the method described above.

According to another aspect of the embodiments of the present disclosure, a non-transitory computer-readable storage medium storing computer instructions is provided, where the computer instructions are used to cause the computer to perform the method described above.

According to the embodiments of the present disclosure, the matched empty sampling image matched with the empty sampling image to be detected is selected from the empty sampling image library after the empty sampling image to be detected is acquired, so that the empty sampling image to be detected can be subjected to fixed noise removal by the matched empty sampling image to obtain the image to be determined, the fixed signal (that is, fixed noise) in the acquire an empty sampling image to be detected can be removed, and the image to be determined does not include the fixed signal; and the fixed signal in the matched empty sampling image can be closer to the fixed signal in the empty sampling image to be detected, so that the accuracy of the image to be determined can be improved. Then correspondingly, when the image to be determined has no shading, the empty sampling image to be detected is added to the empty sampling image library; and/or when the image to be determined has shading but meets the preset condition, the empty sampling image to be detected is added to the empty sampling image library, where the empty sampling image library supports the correction of the fingerprint image. It can be seen that according to the embodiments of the present disclosure, the empty sampling image to be detected can be subjected to image processing through a matched empty sampling image matched with the empty sampling image to be detected in an empty sampling image library so as to obtain a high-accuracy image to be determined; shading detection of the empty sampling image to be detected is achieved by the image to be determined, so that an empty sampling image without shading or with a small shading signal (that is, an empty sampling image to be detected when the image to be determined has no shading and/or the image to be determined has shading but meets a preset condition) is acquired, and the empty sampling image library is updated; then the empty sampling image in the empty sampling library may be the empty sampling image without shading or with the small shading signal; and the empty sampling image library supports the correction of the fingerprint image, so that the correction effect of the fingerprint image can be improved by the empty sampling image in the empty sampling image library, and the influence of the shading signal on the fingerprint image in the process of removing fixed noise is reduced, thereby improving the accuracy of fingerprint identification.

BRIEF DESCRIPTION OF DRAWINGS

More details, features and advantages of the present disclosure are disclosed in the following description of the exemplary embodiments with reference to the accompanying drawings. In the drawings:

FIG. 1 is a schematic flowchart of an image processing method according to an exemplary embodiment of the present disclosure;

FIG. 2 is a schematic flowchart of another image processing method according to an exemplary embodiment of the present disclosure;

FIG. 3 is a schematic flowchart of yet another image processing method according to an exemplary embodiment of the present disclosure;

FIG. 4 is a schematic block diagram of an image processing apparatus according to an exemplary embodiment of the present disclosure; and

FIG. 5 is a structural block diagram of an exemplary electronic device that can be used to implement embodiments of the present disclosure.

## DETAILED DESCRIPTION OF THE EMBODIMENTS

The embodiments of the present disclosure will be described in more detail below with reference to the drawings. Although some embodiments of the present disclosure are shown in the drawings, it should be understood that the present disclosure may be implemented in various forms and should not be limited to the embodiments elaborated herein. On the contrary, these embodiments are provided for a more thorough and complete understanding of the present disclosure. It should be understood that the drawings and embodiments of the present disclosure are only for illustrative purposes and are not intended to limit the protection scope of the present disclosure.

It should be understood that various steps recorded in the method embodiment of the present disclosure may be performed according to different orders and/or be performed in parallel. In addition, the method embodiment may include additional steps and/or omit to perform the shown steps. The scope of the present disclosure is not limited in this aspect.

The term "include/comprise" used herein and its variants mean open inclusion, that is, "including but not limited". The term "based on" means "at least partially based on". The term "one embodiment" means "at least one embodiment"; the term "another embodiment" means "at least one further embodiment"; and the term "some embodiments" means "at least some embodiments". Related definitions of other terms will be given in the following description. It should be noted that the concepts such as "first" and "second" mentioned in the present disclosure are only used for distinguishing different apparatuses, modules or units, and are not intended to limit the order or interdependence relations of the functions performed by these apparatuses, modules or units.

It should be noted that the modifications of "one" and "a plurality of" mentioned in the present disclosure are schematic rather than restrictive, and those skilled in the art should understand that, unless otherwise explicitly stated in the context, the "one" and "a plurality of" should be understood as "one or more".

The names of messages or information exchanged among a plurality of apparatuses in the embodiments of the present disclosure are only for illustrative purposes and are not intended to limit the scope of the messages or information.

It should be noted that an image processing method provided by the embodiments of the present disclosure may be performed by an electronic device; or the electronic device may include a chip, and the image processing method may be performed by the chip in the electronic device, which is not limited by the embodiments of the present disclosure; and optionally, the chip in the electronic device may be an ultrasonic fingerprint sensor, and the chip may be configured to acquire images, such as a fingerprint image or an empty sampling image. The electronic device may be a terminal (that is, a client) or a server; and correspondingly, the terminal mentioned herein may include but is not limited to: a smart phone, a bracelet, a tablet computer, a notebook computer, a desktop computer, a smart watch, an intelligent speech interaction device and the like. The server mentioned herein may be an independent physical server, may be a server cluster including a plurality of physical servers or a distributed system, or may be a cloud server that provides cloud service, a cloud database, cloud computing, a cloud function, cloud storage, network service, cloud communication, middleware service, domain name service, security service, content delivery network (CDN), and basic cloud computing service such as big data and an artificial intelligence platform.

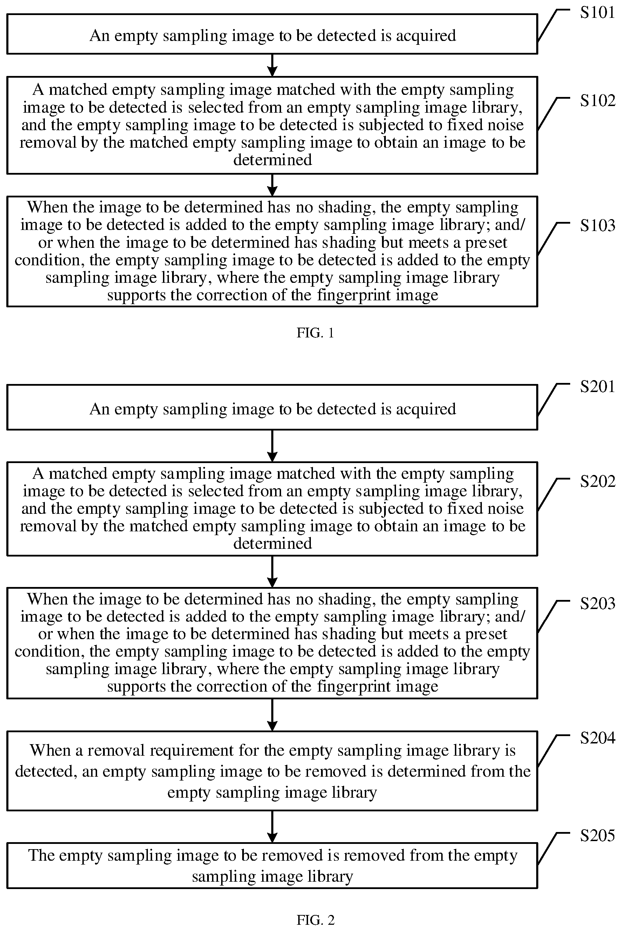

Based on the above description, the embodiments of the present disclosure provide an image processing method. The image processing method may be performed by the electronic device described above, or may be performed by the chip in the electronic device. For the convenience of explanation, the subsequent description is performed by taking the case where the electronic device performs the image processing method as an example. As shown in FIG. 1, the image processing method may include the following steps S101-S103:

S101: an empty sampling image to be detected is acquired.

Where the empty sampling image may be referred to as an ultrasonic base image or base. Optionally, the number of the empty sampling images to be detected may be one or more, which is not limited by the embodiments of the present disclosure; when there are a plurality of empty sampling images to be detected, the electronic device can respectively perform image processing on each empty sampling image to be detected of the plurality of empty sampling images to be detected so as to achieve shading detection of each empty sampling image to be detected, thereby updating an empty sampling image library; and for the convenience of explanation, one empty sampling image to be detected is taken as an example for the subsequent description. It should be understood that the empty sampling image library may include at least one empty sampling image.

In the embodiments of the present disclosure, the acquisition methods of the empty sampling image to be detected may include but are not limited to the following:

a first acquisition method: the electronic device may include a chip (that is, an ultrasonic fingerprint sensor), and in this case, the electronic device can acquire the empty sampling image to be detected through the ultrasonic fingerprint sensor so as to acquire the empty sampling image to be detected. Optionally, the acquired empty sampling image to be detected may also be referred to as real-time base; optionally, the empty sampling image to be detected may be acquired within a preset acquisition duration from the time when a user lifts his/her finger from an acquisition region, so that the acquisition time of the empty sampling image to be detected can be close to the acquisition time of a fingerprint image, that is, some image indication data (such as an acquisition temperature and an acquisition frequency) in an image indication data set of the empty sampling image to be detected can be close to some image indication data in an image indication data set of the fingerprint image, and a fixed signal in the empty sampling image to be detected is closer to a fixed signal in the empty sampling image o be detected; or the empty sampling image to be detected may also be acquired when the user's finger does not touch the acquisition region within a specified time range, or the like, which are not limited by the embodiments of the present disclosure. It can be seen that the empty sampling image to be detected may be acquired when the user's finger does not touch the acquisition region. Optionally, the preset acquisition duration and the specified time range may be set according to experience, or may be set according to actual requirements, which is not limited by the embodiments of the present disclosure.

A second acquisition method: a plurality of undetected empty sampling images may be stored in a storage space of the electronic device; and in this case, the electronic device can select one undetected empty sampling image from the plurality of undetected empty sampling images, and the selected undetected empty sampling image serves as the empty sampling image to be detected.

A third acquisition method: the electronic device can acquire a download link of the empty sampling image; and in this case, the empty sampling image downloaded based on the download link of the empty sampling image can serve as the empty sampling image to be detected, or the like.

S102: a matched empty sampling image matched with the empty sampling image to be detected is selected from an empty sampling image library, and the empty sampling image to be detected is subjected to fixed noise removal by the matched empty sampling image to obtain an image to be determined.

Optionally, the empty sampling image library may also be referred to as a base library, and the electronic device may acquire an optimal cache base (that is, the matched empty sampling image) in the base library in a search form. Optionally, the electronic device may include an empty sampling image correction module (that is, a base correction module) and in this case, the electronic device may acquire the matched empty sampling image through the base correction module, and perform fixed noise removal on the empty sampling image to be detected by the matched empty sampling image to obtain the image to be determined, so that the empty sampling image to be detected can be corrected, and the image to be determined does not include fixed noise.

Specifically, the electronic device can determine the image indication data set of the empty sampling image to be detected, select M target empty sampling images from the empty sampling image library, and determine the image indication data set of each target empty sampling image in the M target empty sampling images. The image indication data set of one image may include at least one of the following: an image grayscale matrix (that can be used to describe line information) of a corresponding image, an acquisition frequency (that is, an ultrasonic frequency when the corresponding image is acquired) of the corresponding image, an acquisition temperature (that is, a temperature of the electronic device when the corresponding image is acquired) of the corresponding image, acquisition time (that is, time of acquiring the corresponding image) of the corresponding image and flight time (that is, a time interval between signal sending time and signal receiving time when the ultrasonic fingerprint sensor acquires the corresponding image) of the corresponding image, that is, the acquisition frequency of the corresponding image is a signal emission frequency of an ultrasonic signal for generating the image (that is, the corresponding image), and the flight time of the corresponding image is signal flight time of the ultrasonic signal for generating the image (that is, the corresponding image). M is a positive integer. It should be understood that M is less than or equal to the number of the empty sampling images in the empty sampling image library. Optionally, the empty sampling image library may include an image indication data set of each empty sampling image of at least one empty sampling image, that is, may include an image indication data set of each target empty sampling image. It should be understood that the closer the acquisition frequency of the matched empty sampling image is to the acquisition frequency of the empty sampling image to be detected, the closer a fixed noise signal (that is, the fixed noise or fixed signal) of the matched empty sampling image can be to the fixed noise signal of the empty sampling image to be detected; and correspondingly, the closer the empty sampling image to be detected is to the matched empty sampling image, the closer the fixed noised signal of the matched empty sampling image can be to the fixed noise signal of the empty sampling image to be detected, then the better the base correction effect is, or the like.

In one embodiment, when M target empty sampling images are selected from the empty sampling image library, the electronic device can add each empty sampling image in the empty sampling image library to the M target empty sampling images, so that the M target empty sampling images include each empty sampling image in the empty sampling image library.

In another embodiment, for any empty sampling image in the empty sampling image library, the electronic device can determine at least one image indication data from an image indication data set of any empty sampling image; if a difference value between each image indication data of at least one image indication data and corresponding image indication data of the empty sampling image to be detected is less than a corresponding preset difference threshold, any empty sampling image is added to M target empty sampling images so as to obtain M target empty sampling images; and it should be understood that if a difference value between corresponding image indication data of the empty sampling image to be detected in at least one image indication data is greater than or equal to the corresponding preset difference threshold, any empty sampling image is not added to the M target empty sampling images. Optionally, at least one image indication data may include but is not limited to: an acquisition frequency and flight time of any empty sampling image. Optionally, one image indication data of at least one image indication data may correspond to one preset difference threshold, and the corresponding preset difference threshold corresponding to each image indication data of at least one image indication data may be set according to experience, or may be set according to actual requirements, which is not limited by the embodiments of the present disclosure. It can be seen that when the difference between at least one image indication data and corresponding image indication data of the empty sampling image to be detected is excessive, the any empty sampling image can be prevented from being added to the M target empty sampling images, so that the empty sampling image with the excessive difference can be prevented from being selected as the matched empty sampling image subsequently, the empty sampling image with excessive difference from the empty sampling image to be detected in the empty sampling image library can be eliminated in advance, the accuracy of the matched empty sampling image can be improved, and the selection efficiency of the matched empty sampling image can be increased.

For example, assuming that the acquisition frequency of the ultrasonic fingerprint sensor is 8 MHz to 12 MHz, at least one image indication data includes the acquisition frequency of the corresponding empty sampling image, the acquisition frequency of the empty sampling image to be detected is 10 MHz, and the preset difference threshold corresponding to the "acquisition frequency" of the image indication data is 1 MHz; and in this case, if the difference value between the acquisition frequency of any empty sampling image and the acquisition frequency of the empty sampling image to be detected is less than 1 MHz, any empty sampling image is added to M target empty sampling images, that is, the empty sampling image with the acquisition frequency of 9 MHz to 11 MHz can be added to the M target empty sampling images.

Based on this, the electronic device can respectively compute the similarity between the image indication data set of the empty sampling image to be detected and the image indication data set of each target empty sampling image, where the similarity between the image indication data set of the empty sampling image to be detected and the image indication data set of one target empty sampling image is used to indicate the similarity between the empty sampling image to be detected and the corresponding target empty sampling image.

In a specific implementation, for any target empty sampling image of M target empty sampling images and for any image indication data in an image indication data set of any target empty sampling image, the electronic device can determine a similarity computing method corresponding to any image indication data of any target empty sampling image; according to the similarity computing method and based on any image indication data of any target empty sampling image and image indication data of the empty sampling image to be detected, the similarity under any image indication data of any target empty sampling image is computed to obtain the similarity under any image indication data of any target empty sampling image; and the similarity under any image indication data of any target empty sampling image may refer to: the similarity between any image indication data of any target empty sampling image and the image indication data of the empty sampling image to be detected; the type which the image indication data of the empty sampling image to be detected belongs to (the type which one image indication data belongs to may also be referred to as the type of one image indication data) is the same as the type which any image indication data of any target empty sampling image belongs to, that is, the image indication data of the empty sampling image to be detected may refer to: image indication data with the same type as that of any image indication data in the image indication data set of the empty sampling image to be detected; and based on this, the similarity under each image indication data of any target empty sampling image can be subjected to weighted summation to obtain the similarity between the image indication data set of the empty sampling image to be detected and the image indication data set of any target empty sampling image. Optionally, a weighted value of the similarity under each image indication data may be set according to experience or may be set according to actual requirements, which is not limited by the embodiments of the present disclosure; exemplarily, the weighted value of the similarity under each image indication data of any target empty sampling image may be sequentially as follows from high to low: the similarity under the image grayscale matrix of any target empty sampling image (that is, the line similarity) the similarity under the acquisition frequency of any target empty sampling image, the similarity under the acquisition temperature of any target empty sampling image, the similarity under the flight time of any target empty sampling image and the similarity under the acquisition time of any target empty sampling image; and that is, when the similarity between any target empty sampling image and the empty sampling image to be detected is computed, the priority order of the used similarity may sequentially be the similarity under the image grayscale matrix of any target empty sampling image, the similarity under the acquisition frequency of any target empty sampling image, the similarity under the acquisition temperature of any target empty sampling image, the similarity under the flight time of any target empty sampling image and the similarity under the acquisition time of any target empty sampling image. It should be understood that the image indication data in the image indication data set of the empty sampling image to be detected is in one-to-one correspondence with the image indication data in the image indication data set of any target empty sampling image; and if the acquisition frequency of the empty sampling image to be detected corresponds to the acquisition frequency of any target empty sampling image, the image grayscale matrix of the empty sampling image to be detected corresponds to the image grayscale matrix of any target empty sampling image, or the like. That is, one image indication data belongs to one type, the same type of image indication data corresponds to each other, and the image indication data set of one image may include at least one type of the following: an image grayscale matrix type, an acquisition frequency type, an acquisition temperature type, a acquisition time type and a flight time type, for example, the acquisition frequency of one image belongs to the acquisition frequency type (that is, the type which the acquisition frequency of one image belongs to may be the acquisition frequency type) the image grayscale matrix of one image belongs to the image grayscale matrix type (that is, the type which the image grayscale matrix of one image belongs to may be the image grayscale matrix type), or the like. Exemplarily, the type which the image grayscale matrix of the empty sampling image to be detected is the same as the type which the image grayscale matrix of any target empty sampling image belongs to, the type which the acquisition frequency of the empty sampling image to be detected belongs to is the same as the type which the acquisition frequency of any target empty sampling image belongs to, or the like.

Optionally, if any image indication data (that is, any image indication data of any target empty sampling image) is the image grayscale matrix of any target empty sampling image, the similarity computing method corresponding to any image indication data may be a structural similarity index measurement (SSIM) computing method, or may be a cosine similarity measurement method, which is not limited by the embodiments of the present disclosure. Exemplarily, when any image indication data is the image grayscale matrix of any target empty sampling image and the similarity computing method corresponding to any image indication data is the cosine similarity measurement method, the image indication data of the empty sampling image to be detected may be the image grayscale matrix of the empty sampling image to be detected, and the electronic device can compute the similarity under any image indication data by a formula 1.1 and based on any image indication data and the image indication data of the empty sampling image to be detected:

$$\cos(A, B) = \frac{\sum_{i=1}^{n} (A_i \times B_i)}{\sqrt{\sum_{i=1}^{n} (A_i)^2} \sqrt{\sum_{i=1}^{n} (B_i)^2}} \quad \text{Formula 1.1}$$

where A may represent the image grayscale matrix of any target empty sampling image, $A_i$ may represent the $i^{th}$ feature (that is, the $i^{th}$ pixel value) in the image grayscale matrix of any target empty sampling image, B may represent the image grayscale matrix of the empty sampling image to be detected, $B_i$ may represent the $i^{th}$ feature in the image grayscale matrix of the empty sampling image to be detected, it is a positive integer less than or equal to n, and n may be the number of the features included in one image (that is, the number of the features included in the image grayscale matrix of one image), that is, the number of pixel points in one image.

Optionally, if the numerical values of different feature dimensions are quite different, feature similarity measurement computation may also be performed by a custom weight method, that is, the electronic device may compute the similarity under any image indication data by a formula 1.2:

$$\cos(K \times A, K \times B) = \frac{\sum_{i=1}^{n} (K_i^2 \times A_i \times B_i)}{\sqrt{\sum_{i=1}^{n} (K_i \times A_i)^2} \sqrt{\sum_{i=1}^{n} (K_i \times B_i)^2}} \quad \text{Formula 1.2}$$

where $K_i$ may represent the weight of the $i^{th}$ feature. Optionally, the weight of each feature may be set according to experience, or may be set according to actual requirements, which is not limited by the embodiments of the present disclosure.

Correspondingly, if any image indication data is a single feature, such as the acquisition frequency or flight time, of any target empty sampling image, the similarity computing method corresponding to any image indication data may be a distance reciprocal computing method, where the distance reciprocal computing method refers to the reciprocal operation of the difference value between two image indication data. Based on this, taking the case where any image indication data is the acquisition frequency of any target empty sampling image as an example, the electronic device can compute a frequency difference value between the acquisition frequency of any target empty sampling image and the acquisition frequency of the empty sampling image to be detected and take the reciprocal of the frequency difference value as the similarity under any image indication data. At this time, the smaller the frequency difference value is, the greater the similarity under any image indication data is, that is, the closer the acquisition frequency is, the greater the similarity can be.

Further, the electronic device can take the target empty sampling image with the greatest similarity to the empty sampling image to be detected in the M target empty sampling images as the matched empty sampling image matched with the empty sampling image to be detected based on the similarity between the empty sampling image to be detected and each target empty sampling image; and that is, the matched empty sampling image matched with the empty sampling image to be detected can be selected from the M target empty sampling images, where the similarity between the empty sampling image to be detected and the matched empty sampling image is greater than or equal to the similarity between the empty sampling image to be detected and the target empty sampling image except the matched empty sampling image in the M target empty sampling images.

In a specific implementation, the electronic device can directly select the target empty sampling image with the greatest similarity to the empty sampling image to be detected from the M target empty sampling images so as to obtain the matched empty sampling image. In this case, when the number of the target empty sampling images with the greatest similarity to the empty sampling image to be detected is one, the matched empty sampling image can be directly obtained; and when the number of the target empty sampling images with the greatest similarity to the empty sampling image to be detected is multiple, one target empty sampling image can be selected randomly from the plurality of target empty sampling images with the greatest similarity so as to obtain the matched empty sampling image, or the target empty sampling image with the greatest similarity under the acquisition frequency from the plurality of target empty sampling images with the greatest similarity can serve as the matched empty sampling image, or the like, which is not limited by the embodiments of the present disclosure.

In another specific implementation, the electronic device can sort each target empty sampling image (according to the descending order of the similarity or according to the ascending order of the similarity) based on the similarity between the empty sampling image to be detected and each target empty sampling image so as to obtain a sorting result, and select the matched empty sampling image from the sorting result; and exemplarily, taking the descending order of similarity as an example, the first target empty sampling image in the sorting result can be selected as the matched empty sampling image. Optionally, if there are a plurality of target empty sampling images with the same similarity with the empty sampling image to be detected, the plurality of target empty sampling images with the same similarity can be sorted randomly; or sorting indication information of each target empty sampling image can be determined based on the similarity under the acquisition frequency and/or flight time of each target empty sampling image of the plurality of target empty sampling images, and the plurality of target empty sampling images with the same similarity can be further sorted based on the sorting indication information of each target empty sampling image, or the like.

Optionally, for any same target empty sampling image of the plurality of target empty sampling images with the same similarity, the similarity under the acquisition frequency of any same target empty sampling image (the reciprocal of the frequency difference value between the acquisition frequency of any same target empty sampling image and the acquisition frequency of the empty sampling image to be detected) can serve as the sorting indication information of any same target empty sampling image; or the similarity under the flight time of any same target empty sampling image (such as the reciprocal of the time difference value between the flight time of any same target empty sampling image and the flight time of the empty sampling image to be detected) can serve as the sorting indication information of any same target empty sampling image; or the similarity under the acquisition frequency of any same target empty sampling image and the similarity under the flight time of any same target empty sampling image can be subjected to weighted summation (such as summation operation or mean value operation) so as to obtain the sorting indication information of any same target empty sampling image, or the like.

For example, when sorting is performed according to the descending order of the similarity and there are a plurality of target empty sampling images with the same similarity, the plurality of target empty sampling images with the same similarity can be sorted according to the descending order of the sorting indication information; and when sorting is performed according to the ascending order of the similarity and there are a plurality of target empty sampling images with the same similarity, the plurality of target empty sampling images with the same similarity can be sorted according to the ascending order of the sorting indication information, or the like.

S103: when the image to be determined has no shading, the empty sampling image to be detected is added to the empty sampling image library; and/or when the image to be determined has shading but meets a preset condition, the empty sampling image to be detected is added to the empty sampling image library, where the empty sampling image library supports the correction of the fingerprint image.

Specifically, when the image to be determined has no shading and/or the image to be determined has shading but meets the preset condition, the electronic device can add the empty sampling image to be detected to the empty sampling image library, so that the empty sampling image library includes the empty sampling image to be detected, that is, the empty sampling image to be detected can serve as one empty sampling image in the empty sampling image library, thereby updating the empty sampling image library. Based on this, the empty sampling image to be detected can be cached into an internal memory for the subsequent base correction of the image fixed noise.

It should be understood that when the image to be determined has shading but does not meet the preset condition, the empty sampling image to be detected may not be added to the empty sampling image library, that is, the empty sampling image library can be updated without the empty sampling image to be detected.

According to the embodiments of the present disclosure, the matched empty sampling image matched with the empty sampling image to be detected is selected from the empty sampling image library after the empty sampling image to be detected is acquired, so that the empty sampling image to be detected can be subjected to fixed noise removal by the matched empty sampling image to obtain the image to be determined, the fixed signal (that is, fixed noise) in the acquire an empty sampling image to be detected can be removed, and the image to be determined does not include the fixed signal; and the fixed signal in the matched empty sampling image can be closer to the fixed signal in the empty sampling image to be detected, so that the accuracy of the image to be determined can be improved. Then correspondingly, when the image to be determined has no shading, the empty sampling image to be detected is added to the empty sampling image library; and/or when the image to be determined has shading but meets the preset condition, the empty sampling image to be detected is added to the empty sampling image library, where the empty sampling image library supports the correction of the fingerprint image. It can be seen that according to the embodiments of the present disclosure, the empty sampling image to be detected can be subjected to image processing through a matched empty sampling image matched with the empty sampling image to be detected in an empty sampling image library so as to obtain a high-accuracy image to be determined; shading detection of the empty sampling image to be detected is achieved by the image to be determined, so that an empty sampling image without shading or with a small shading signal (that is, an empty sampling image to be detected when the image to be determined has no shading and/or the image to be determined has shading but meets a preset condition) is acquired, and the empty sampling image library is updated; then the empty sampling image in the empty sampling library may be the empty sampling image without shading or with the small shading signal; and the empty sampling image library supports the correction of the fingerprint image, so that the correction effect of the fingerprint image can be improved by the empty sampling image in the empty sampling image library, and the influence of the shading signal on the fingerprint image in the process of removing fixed noise is reduced, thereby improving the accuracy of fingerprint identification.

Based on the above description, the embodiments of the present disclosure further provides a specific image processing method. Correspondingly, the image processing method may be performed by the electronic device described above, or may be performed by the chip in the electronic device. For the convenience of explanation, the subsequent description is performed by taking the case where the electronic device performs the image processing method as an example. Referring to FIG. 2, the image processing method may include the following steps S201-S205:

S201: an empty sampling image to be detected is acquired.
S202: a matched empty sampling image matched with the empty sampling image to be detected is selected from an empty sampling image library, and the empty sampling image to be detected is subjected to fixed noise removal by the matched empty sampling image to obtain an image to be determined.

In one embodiment, when the empty sampling image to be detected is subjected to fixed noise removal by the matched empty sampling image to obtain the image to be determined, the electronic device can perform difference value operation on the empty sampling image to be detected and the matched empty sampling image, and the obtained residual image is an image to be determined, that is, the empty sampling image to be detected and the matched empty sampling image can be subjected to difference value operation to obtain the residual image, so that the signal of the empty sampling image to be detected can be restored, and the residual image can serve as the image to be determined.

In another embodiment, the electronic device can perform difference value operation on the empty sampling image to be detected and the matched empty sampling image to obtain a residual image and can perform image noise reduction processing on the residual image to obtain an image to be determined, that is, the residual image after the image noise reduction process can serve as the image to be determined to perform fixed noise removal on the empty sampling image to be detected by the matched empty sampling image to obtain the image to be determined. Optionally, the electronic device can perform image noise reduction processing on the residual image by an image noise reduction algorithm so as to make the signal in the image to be determined more remarkable, and the image to be determined obtained at this time basically can observe two types with and without fingerprint and a small number of special results (such as having a water drop or dirt). Therefore, the image to be determined has enough features for the next shading detection.

Optionally, the image noise reduction algorithm may include but is not limited to: an image smoothing algorithm, a frequency domain Gaussian low-pass filtering algorithm, a Wiener filtering algorithm and the like, which is not limited by the embodiments of the present disclosure.

Optionally, the electronic device may include a base correction module, then the electronic device can perform the step S202 by the base correction module, thereby removing the fixed noise in the empty sampling image to be detected.

S203: when the image to be determined has no shading, the empty sampling image to be detected is added to the empty sampling image library; and/or when the image to be determined has shading but meets a preset condition, the empty sampling image to be detected is added to the empty sampling image library, where the empty sampling image library supports the correction of the fingerprint image.

Optionally, the electronic device may also perform image classification on the image to be determined to obtain a shading category of the image to be determined. The shading category is any one of the following: a category having no shading and a category having shading, where the shading includes at least one of the following: fingerprint, a water drop and dirt (such as dust). Optionally, the image classification may be bi-classification prediction or may be multi-classification prediction, which is not limited by the embodiments of the present disclosure; and when the image classification is the multi-classification prediction, the category having shading may be further divided into a fingerprint category, a water drop category and a dirt category, that is, the category having shading may include at least one of the following: a fingerprint category, a water drop category and a dirt category.

If the shading category is the category having no shading, it can be determined that the image to be determined has no shading; and if the shading category is the category having shading, it can be determined that the image to be determined has shading. It should be understood that if the shading category is any category of the fingerprint category, the water drop category and the dirt category in the category having shading, it can be determined that the image to be determined has shading.

In the embodiments of the present disclosure, the shading category may be obtained through image classification performed by a shading detection and classification model, and the shading detection and classification model may be a convolutional neural network (such as bi-classification network or multi-classification network). Based on this, when the image to be determined is subjected to image classification to obtain the shading category of the image to be determined, the electronic device can perform normalization processing on the image to be determined to obtain a normalized image to be determined so as to meet the input requirement of the convolutional neural network; and the shading detection and classification model can be called to perform image classification on the normalized image to be determined to obtain the shading category of the image to be determined. In the embodiments of the present disclosure, the shading category of the image to be determined may also serve as the shading category of the empty sampling image to be detected.

Optionally, according to the embodiments of the present disclosure, an image classification task can be completed by a small convolutional neural network; for a feature extraction part, feature extraction can be performed by the structures of a stacked convolutional layer and a pooling layer; and for a predictive regression part, a classification prediction result (that is, the shading category) can be obtained by the structure of a stacked full connection layer.

Optionally, the electronic device may include a convolutional network module; and in this case, the electronic device can perform image classification on the image to be determined through the convolutional network module to obtain the shading category of the image to be determined.

Optionally, the electronic device may also acquire an initial shading detection and classification model and a training empty sampling image set, and respectively determine a training matched empty sampling image of each training empty sampling image in the training empty sampling image set from the empty sampling image library, so that a training residual image of each training empty sampling image can be determined based on the difference value operation value between each training empty sampling image and the corresponding training matched empty sampling image. Then, the initial shading detection and classification model can be called to respectively perform image classification on the training residual image of each training empty sampling image to obtain the shading category of each trailing residual image, so that a model loss value is computed based on the shading category of each training residual image and the corresponding label category, a model parameter in the initial shading detection and classification model is optimized according to a direction of reducing the model loss value to obtain the optimized initial shading detection and classification model, thereby determining the shading detection and classification model based on the optimized initial shading detection and classification model. It should be understood that the electronic device can continuously perform model optimization on the optimized initial shading detection and classification model until a convergence condition is reached (for example, the number of iterations reaches a preset iteration number threshold, or the model loss value is less than a model loss threshold) so as to obtain the shading detection and classification model. Optionally, the preset iteration number threshold and the model loss threshold may be set according to experience, or may be set according to actual requirements, which is not limited by the embodiments of the present disclosure.

**In** other embodiments, the shading detection and classification model may further be a support vector machine classification model, a random forest classification model, a decision-making tree classification model, a deep learning model and the like, which is not limited by the embodiments of the present disclosure.

Further, if the shading category is the fingerprint category in the category having shading, it can be determined that the image to be determined does not meet the preset condition; if the shading category is the water drop category or dirt category in the category having shading, foreign matter indication information of the image to be determined can be determined; if the foreign matter indication information is less than a preset indication threshold, it can be determined that the image to be determined meets the preset condition; and if the foreign matter indication information is greater than or equal to the preset indication threshold, it can be determined that the image to be determined does not meet the preset condition. The foreign matter includes a water drop and/or dirt.

Optionally, when the foreign matter indication information of the image to be determined is determined, the electronic device can perform image identification on the image to be determined to identify a region where the foreign matter (such as a water drop and/or dirt) in the image to be determined is located, so that the foreign matter area and/or the signal intensity of the region where the foreign matter is located can be determined based on the region where the foreign matter is located so as to determine the foreign matter indication information of the image to be determined, that is, the foreign matter indication information may include at least one of the following: the foreign matter area (that is, the area of the region where the foreign matter is located) and the signal intensity of the region where the foreign matter is located. Optionally, the signal intensity of the region where the foreign matter is located may be a mean value of each pixel value in the region where the foreign matter is located, or may be a maximum pixel value in the region where the foreign matter is located, or the like, which is not limited by the embodiments of the present disclosure.

Optionally, the foreign matter indication information may include the foreign matter area and/or the signal intensity of the region where the foreign matter is located, then correspondingly, the preset indication threshold may include a preset area threshold and/or a preset intensity threshold. Optionally, if the foreign matter indication information includes the foreign matter area or the signal intensity of the region where the foreign matter is located, it can be determined that the foreign matter indication information is less than the preset indication threshold when the foreign matter area is less than the preset area threshold or the signal intensity of the region where the foreign matter is located is less than the preset intensity threshold, and it can be determined that the foreign matter indication information is greater than or equal to the preset indication threshold when the foreign matter area is greater than or equal to the preset area threshold or the signal intensity of the region where the foreign matter is located is greater than or equal to the preset intensity threshold. Correspondingly, if the foreign matter indication information includes the foreign matter area and the signal intensity of the region where the foreign matter is located, it can be determined that the foreign matter indication information is less than the preset indication threshold when the foreign matter area is less than the preset area threshold and the signal intensity of the region where the foreign matter is located is less than the preset intensity threshold, and it can be determined that the foreign matter indication information is greater than or equal to the preset indication threshold when the foreign matter area is greater than or equal to the preset area threshold or the signal intensity of the region where the foreign matter is located is greater than or equal to the preset intensity threshold. Optionally, the preset area threshold and the preset intensity threshold may be set according to experience or may be set according to actual requirements, which is not limited by the embodiments of the present disclosure. That is, the preset indication threshold may be set according to experience or may be set according to actual requirements.

Optionally, when the empty sampling image library is updated by the empty sampling image to be detected (that is, when the empty sampling image to be detected is added to the empty sampling image library), the electronic device also can add the image indication data set of the empty sampling image to be detected to the empty sampling image library; and when the empty sampling image to be detected is not added to the empty sampling image library, the image indication data set of the empty sampling image to be detected cannot be added to the empty sampling image library. Exemplarily, features such as the acquisition frequency and the flight time of the empty sampling image to be detected also can be stored in the empty sampling image library for the subsequent image matching, thereby being used for the subsequent base correction.

S204: when a removal requirement for the empty sampling image library is detected, an empty sampling image to be removed is determined from the empty sampling image library.

Optionally, when the electronic device can detect that the empty sampling image library reaches the upper limit of the library capacity, it is determined that the removal requirement for the empty sampling image library is detected; or the empty sampling image library may further include an image gradient under each empty sampling image, and it can be determined that the removal requirement for the empty sampling image library is detected when it is detected that the number of the empty sampling images in the empty sampling image library is greater than a preset storage quantity threshold and the empty sampling image with the image gradient greater than a preset gradient threshold is present in the empty sampling image library, or the like, which is not limited by the embodiments of the present disclosure. Optionally, the upper limit of the library capacity, the preset storage quantity threshold and the preset gradient threshold may be set according to experience, or may be set according to actual requirements, which is not limited by the embodiments of the present disclosure.

In one specific implementation, the electronic device can determine the adding time of each empty sampling image in the empty sampling image library and take the empty sampling image with the earliest adding time in the empty sampling image library as an empty sampling image to be removed. Optionally, the empty sampling image library can store the adding time of each empty sampling image so as to determine the adding time of each empty sampling image; or each empty sampling image in the empty sampling image library may be subjected to empty sampling image library updating according to the form of a queue and in the order of the adding time; at this time, a first empty sampling image in the empty sampling image library may be located before a second empty sampling image, and the adding time of the first empty sampling image may be earlier than the adding time of the second empty sampling image, that is, at this time, the adding time of each empty sampling image can be determined according to the order of each empty sampling image in the empty sampling image library, and the adding time of each empty sampling image can be represented by the order, for example, the adding time of the empty sampling image located at a first position may be 1, and the smaller the value, the earlier the adding time, or the closer to the front the position where the empty sampling image is located, the earlier the adding time, or the like.

Based on this, the electronic device can remove the redundant cache base (that is, the empty sampling image to be removed) according to the principle of first-in first-out.

In another specific implementation, the empty sampling image library may be further configured to store an image gradient under each empty sampling image; based on this, when the empty sampling image to be detected is added to the empty sampling image library, the image gradient under the empty sampling image to be detected can be determined by the image to be determined, and the image gradient under the empty sampling image to be detected is added to the empty sampling image library; and when the empty sampling image to be detected is not added to the empty sampling image library, the image gradient under the empty sampling image to be detected is not computed. In this case, the electronic device can determine the image gradient under each empty sampling image and select the empty sampling image to be removed from the empty sampling image library based on the image gradient under each empty sampling image, where the image gradient under the empty sampling image to be removed is greater than the image gradient under the empty sampling image except the empty sampling image to be removed in the empty sampling image library, or the image gradient under the empty sampling image to be removed is empty, and the image gradient under the initial empty sampling image in the empty sampling image library is empty. It should be understood that the empty sampling image library may initially have at least one initial empty sampling image, that is, at least one initial empty sampling image can be directly added to the empty sampling image library for the subsequent image matching; and optionally, at least one initial empty sampling image may be set according to experience, may be set according to actual requirements, or may be the first Q acquired empty sampling images, where Q is a positive integer, or the like, which is not limited by the embodiments of the present disclosure.

Optionally, if the empty sampling image with the image gradient being empty is present in the empty sampling image library, one empty sampling image with the image gradient being empty can be determined from the empty sampling image library first, and the determined empty sampling image can serve as the empty sampling image to be removed, for example, the empty sampling image with the earliest adding time and the image gradient being empty is determined, or one empty sampling image with the image gradient being empty is randomly selected; and if the empty sampling image with the image gradient being empty is not present in the empty sampling image library, the empty sampling image with the greatest image gradient in the empty sampling image library can serve as the empty sampling image to be removed.

Optionally, the electronic device also can take the empty sampling image with the image gradient greater than the preset gradient threshold in the empty sampling image library as the empty sampling image to be removed so as to remove the empty sampling image with greater image gradient in advance.

Based on this, according to the embodiments of the present disclosure, the empty sampling image which is difficult to be detected by the shading detection and classification model and may have shading can be removed from the empty sampling image library, so that the influence on the correction processing process on the empty sampling image which may have shading can be avoided, and the correction effect can be further improved.

Specifically, when the image gradient under the empty sampling image to be detected is determined by the image to be determined, a gradient computing image grayscale matrix can be determined by the image to be determined, so that the gradient computing image grayscale matrix is processed by a target operator to obtain an image gradient matrix, and the image gradient under the empty sampling image to be detected is determined by the image gradient matrix. For example, the image gradient matrix serves as the image gradient under the empty sampling image to be detected, or the mean value of each element in the image gradient matrix serves as the image gradient under the empty sampling image to be detected, or the like. Optionally, the target operator may be a Sobel operator (an operator for pixel image edge detection), or may be a Scharr operator (another operator for pixel image edge detection) which is not limited by the embodiments of the present disclosure. Optionally, the gradient computing image grayscale matrix may be an image grayscale matrix of the image to be determined, or may be a normalization result of the image grayscale matrix of the image to be determined, which is not limited by the embodiments of the present disclosure. Correspondingly, the image gradient can be used to indicate the change degree of a pixel value in the corresponding gradient computing image grayscale matrix; the greater the image gradient, the greater the change degree, and the gradient computing image grayscale matrix is more likely to have noise, that is, the image to be determined may have noise, so that the image gradient can be used to indicate the possibility that the corresponding empty sampling image includes shading.

Exemplarily, the case where the target operator is the Sobel operator is taken as an example for further elaboration, and the electronic device can use the Sobel operator to process the gradient computing image grayscale matrix to obtain the image gradient matrix. Specifically, the electronic device can compute the image gradient matrix by using a formula 2.1:

$$G = \sqrt{G_x^2 + G_y^2} \quad \text{Formula } 2.1$$

where G may be the image gradient matrix, $G_x$ may be a horizontal gradient, and $G_y$ may be a vertical gradient. Optionally, the electronic device can compute $G_x$ by a formula 2.2:

$$G_x = \begin{bmatrix} 1 & 0 & -1 \\ 2 & 0 & -2 \\ 1 & 0 & -1 \end{bmatrix} \times W \quad \text{Formula 2.2}$$

where W may be the gradient computing image grayscale matrix, and a first matrix on the right of the equal sign may be a convolutional kernel for computing the horizontal gradient.

Correspondingly, the electronic device can compute $G_y$ by a formula 2.3:

$$G_y = \begin{bmatrix} 1 & 2 & 1 \\ 0 & 0 & 0 \\ -1 & -2 & -1 \end{bmatrix} \times W \quad \text{Formula 2.3}$$

where a first matrix on the right of the equal sign may be a convolutional kernel for computing the vertical gradient.

S205: the empty sampling image to be removed is removed from the empty sampling image library.

It should be understood that the electronic device can remove additional information (such as the image gradient, flight time and frequency) of the empty sampling image to be removed from the empty sampling image library, that is, the image indication data set of the empty sampling image to be removed can be removed from the empty sampling image library.

Optionally, the electronic device may include an empty sampling image library updating module (that is, base library updating module); and in this case, the electronic device can add the empty sampling image to be detected to the empty sampling image library through the empty sampling image library updating module and remove the empty sampling image to be removed from the empty sampling image library, or the like.

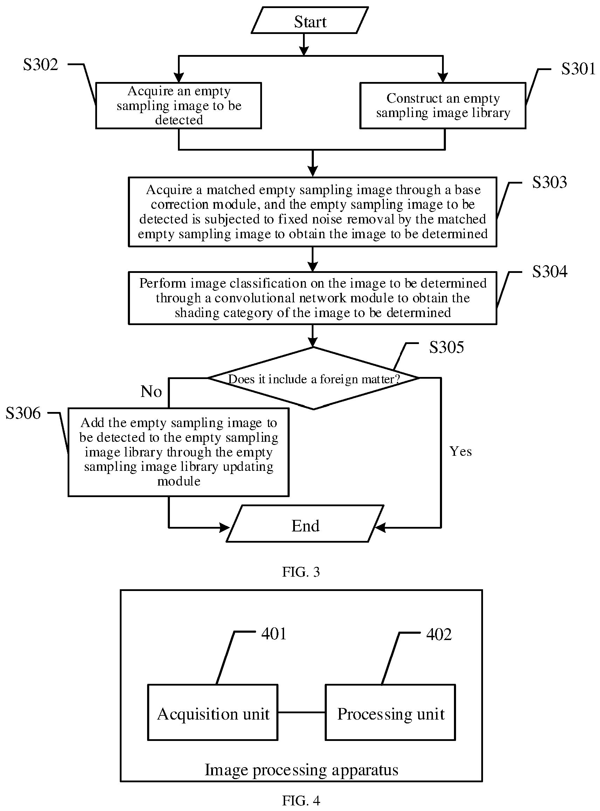

Exemplarily, as shown in FIG. 3, the electronic device can perform the step S301 to construct the empty sampling image library and can perform the step S302 to acquire the empty sampling image to be detected; correspondingly, the step S303 can be performed to acquire the matched empty sampling image (that is, acquire the matched empty sampling image matched with the empty sampling image to be detected from the empty sampling image library) through the base correction module, and the empty sampling image to be detected is subjected to fixed noise removal by the matched empty sampling image to obtain the image to be determined; and the step S304 can be performed to perform image classification on the image to be determined through a convolutional network module to obtain the shading category of the image to be determined. Based on this, the step S305 can be performed to determine whether the empty sampling image to be detected include a foreign matter, that is, determine whether the empty sampling image to be detected include the foreign matter based on the shading category of the image to be determined; when it is determined that the empty sampling image to be detected does not include the foreign matter(that is, the image to be determined has no shading and/or the image to be determined has shading but meets the preset condition), the step S306 can be performed to add the empty sampling image to be detected to the empty sampling image library through the empty sampling image library updating module; and when it is determined that the empty sampling image to be detected includes the foreign matter (that is, the image to be determined has shading but does not meet the preset condition), the empty sampling image to be detected cannot be added to the empty sampling image library, that is, at this time, the empty sampling image library updating module may not be used, that is, the step 306 is not performed.

Optionally, the electronic device also can perform fixed noise removal on the fingerprint image by the empty sampling image library so as to obtain the corrected fingerprint image and perform fingerprint identification on the corrected fingerprint image. Specifically, the electronic device can acquire a fingerprint image to be identified, and the fingerprint image to be identified includes user fingerprint information; then, an empty sampling image for correcting the fingerprint image to be identified can be selected from the empty sampling image library, and the fingerprint image to be identified is subjected to fixed noise removal by performing difference value operation on the fingerprint image to be identified and the empty sampling image so as to obtain the corrected fingerprint image to be identified; and based on this, the corrected fingerprint image to be identified can be subjected to fingerprint identification to obtain a fingerprint identification result.

Optionally, the electronic device also can select the empty sampling image for correcting the fingerprint image to be identified from the empty sampling image library according to a method for determining the matched empty sampling image so as to further improve the accuracy of the fingerprint identification result.

It should be noted that an ultrasonic base image (that is, an empty sampling image) may effectively acquire a fixed noise signal acquired by an ultrasonic sensor (that is, an ultrasonic fingerprint sensor), and the interference of the fixed noise signal can be removed after subtraction with an ultrasonic fingerprint image; however, in the ultrasonic base image, a non-fixed shading signal, such as fingerprint, a water drop and dirt (such as dust), may be acquired. These non-fixed signals may interfere with the fingerprint signal after being subtracted from the ultrasonic fingerprint image. Based on this, according to the embodiments of the present disclosure, the ultrasonic base image with a shading signal can be detected, and the empty sampling image library is constructed by the empty sampling image without the shading signal and/or with a small shading signal, so that the fingerprint image is subjected to fixed noise removal by the empty sampling image in the empty sampling image library, thereby effectively avoiding the interference of the empty sampling image with a large shading signal on a fingerprint signal (that is, fingerprint image).

According to the embodiments of the present disclosure, the matched empty sampling image matched with the empty sampling image to be detected can be selected from the empty sampling image library after the empty sampling image to be detected is acquired, so that the empty sampling image to be detected is subjected to fixed noise removal by the matched empty sampling image to obtain the image to be determined. Based on this, when the image to be determined has no shading, the empty sampling image to be detected can be added to the empty sampling image library; and/or when the image to be determined has shading but meets the preset condition, the empty sampling image to be detected can be added to the empty sampling image library, where the empty sampling image library supports the correction of the fingerprint image. Further, when the removal requirement for the empty sampling image library is detected, the empty sampling image to be removed can be determined from the empty sampling image library, and the empty sampling image to be removed is removed from the empty sampling image library. It can be seen that the embodiments of the present disclosure provide an empty sampling image shading detection solution for an ultrasonic fingerprint sensor; the empty sampling image to be detected can be subjected to image processing through framework design, deep learning network detection and other methods so as to identify an empty sampling image with shading and construct an empty sampling image library without shading, thereby preventing abnormal shading generated by the base correction under the ultrasonic fingerprint image processing flow, effectively reduce the identification error caused by an abnormal signal appearing in the subsequent flow of the algorithm, and effectively improving the overall performance of the ultrasonic fingerprint identification.

Based on the description of the related embodiments of the image processing method, the embodiments of the present disclosure further provide an image processing apparatus. The image processing apparatus may be a computer program (including a program code) running in the electronic device; optionally, the electronic device may include a chip, and the image processing apparatus may also be a computer program running in the chip included in the electronic device; and as shown in FIG. 4, the image processing apparatus may include an acquisition unit 401 and a processing unit 402. The image processing apparatus may perform the image processing method shown in FIG. 1 or FIG. 2, that is, the image processing apparatus may operate the above units:

the acquisition unit 401, configured to acquire an empty sampling image to be detected;

the processing unit 402, configured to select a matched empty sampling image matched with the empty sampling image to be detected from the empty sampling image library, and perform fixed noise removal on the empty sampling image to be detected by the matched empty sampling image to obtain an image to be determined; and

the processing unit 402, further configured to: when the image to be determined has no shading, add the empty sampling image to be detected to the empty sampling image library, and/or when the image to be determined has shading but meets a preset condition, add the empty sampling image to be detected to the empty sampling image library, where the empty sampling image library supports the correction of a fingerprint image.

In one embodiment, when selecting the matched empty sampling image matched with the empty sampling image to be detected from the empty sampling image library, the processing unit 402 may be specifically configured to:

determine the image indication data set of the empty sampling image to be detected, select M target empty sampling images from the empty sampling image library, and determine the image indication data set of each target empty sampling image in the M target empty sampling images, where the image indication data set of one image includes at least one of the following: an image grayscale matrix of a corresponding image, an acquisition frequency of the corresponding image, an acquisition temperature of the corresponding image, acquisition time of the corresponding image and flight time of the corresponding image, M is a positive integer, the acquisition frequency of the corresponding image is a signal emission frequency of an ultrasonic signal for generating the image and the flight time of the corresponding image is signal flight time of the ultrasonic signal for generating the image;

respectively compute the similarity between the image indication data set of the empty sampling image to be detected and the image indication data set of each target empty sampling image, where the similarity between the image indication data set of the empty sampling image to be detected and the image indication data set of one target empty sampling image is used to indicate the similarity between the empty sampling image to be detected and the corresponding target empty sampling image; and

based on the similarity between the empty sampling image to be detected and each target empty sampling image, take the target empty sampling image with the greatest similarity to the empty sampling image to be detected in the M target empty sampling images as the matched empty sampling image matched with the empty sampling image to be detected.

In another embodiment, when respectively computing the similarity between the image indication data set of the empty sampling image to be detected and the image indication data set of each target empty sampling image, the processing unit 402 may be specifically configured to:

for any target empty sampling image of the M target empty sampling images and for the any image indication data in the image indication data set of any target empty sampling image, determine a similarity computing method corresponding to any image indication data of the any target empty sampling image;

according to the similarity computing method and based any image indication data of the any target empty sampling image and the image indication data of the empty sampling image to be detected, compute the similarity under any image indication data of the any target empty sampling image so as to obtain the similarity under each image indication data of the any target empty sampling image, where the similarity under any image indication data of the any target empty sampling image refers to the similarity between any image indication data of the any target empty sampling image and the image indication data of the empty sampling image to be detected, and the type which the image indication data of the empty sampling image to be detected belongs to is the same as the type which any image indication data of the any target empty sampling image belongs to; and

perform weighted summation on the similarity under each image indication data of the any target empty sampling image to obtain the similarity between the image indication data set of the empty sampling image to be detected and the image indication data set of the any target empty sampling image.

In another embodiment, when selecting M target empty sampling images from the empty sampling image library, the processing unit 402 may be specifically configured to:

add each empty sampling image in the empty sampling image library to the M target empty sampling images, so that the M target empty sampling images include each empty sampling image in the empty sampling image library; or

for any empty sampling image in the empty sampling image library, determine at least one image indication data from the image indication data set of the any empty sampling image; and if the difference value between each image indication data of the at least one image indication data and the corresponding image indication data of the empty sampling image to be detected is less than a corresponding preset difference threshold, add the any empty sampling image to the M target empty sampling images so as to obtain the M target empty sampling images.

In another embodiment, the processing unit 402 may be further configured to:

perform image classification on the image to be determined to obtain a shading category of the image to be determined, where the shading category is any one of the following: a category having no shading and a category having shading, the shading includes at least one of the following: fingerprint, a water drop and dirt;

if the shading category is the category having no shading, determine that the image to be determined has no shading; and

if the shading category is the category having shading, determine that the image to be determined has shading.

In another embodiment, the category having shading includes at least one of the following: a fingerprint category, a water drop category and a dirt category; and the processing unit 402 may be further configured to:

if the shading category is the fingerprint category in the category having shading, determine that the image to be determined does not meet the preset condition;

if the shading category is the water drop category or dirt category in the category having shading, determine foreign matter indication information of the image to be determined; if the foreign matter indication information is less than a preset indication threshold, determine that the image to be determined meets the preset condition; and if the foreign matter indication information is greater than or equal to the preset indication threshold, determine that the image to be determined does not meet the preset condition.

In another embodiment, the foreign matter indication information includes at least one of the following: a foreign matter area and a signal intensity of a region where the foreign matter is located, where the foreign matter includes a water drop and/or dirt.

In another embodiment, the shading category is obtained by performing image classification on a shading detection and classification model; the shading detection and classification model is a convolutional neural network; and when performing image classification on the image to be determined to obtain the shading category of the image to be determined, the processing unit 402 may be specifically configured to:

perform normalization processing on the image to be determined to obtain a normalized image to be determined; and
call the shading detection and classification model to perform image classification on the normalized image to be determined so as to obtain the shading category of the image to be determined.

In another embodiment, the processing unit 402 may be further configured to:

determine an empty sampling image to be removed from the empty sampling image library when detecting the removal requirement for the empty sampling image library; and
remove the empty sampling image to be removed from the empty sampling image library.

In another embodiment, the processing unit 402 may be further configured to:

when the empty sampling image to be detected is added to the empty sampling image library, determine an image gradient under the empty sampling image to be detected by the image to be determined, and add the image gradient under the empty sampling image to be detected to the empty sampling image library; and
when the empty sampling image to be detected is not added to the empty sampling image library, the image gradient under the empty sampling image to be detected is not calculated.

In another embodiment, when determining the empty sampling image to be removed from the empty sampling image library, the processing unit 402 may be specifically configured to:

determine the adding time of each empty sampling image in the empty sampling image library and take the empty sampling image with the earliest adding time in the empty sampling image library as an empty sampling image to be removed; or
determine the image gradient under each empty sampling image and select the empty sampling image to be removed from the empty sampling image library based on the image gradient under each empty sampling image, where the image gradient under the empty sampling image to be removed is greater than the image gradient under the empty sampling image except the empty sampling image to be removed in the empty sampling image library, or the image gradient under the empty sampling image to be removed is empty, and the image gradient under the initial empty sampling image in the empty sampling image library is empty.

In another embodiment, the processing unit 402 may be further configured to:

when the empty sampling image to be detected is added to the empty sampling image library, add the image indication data set of the empty sampling image to be detected to the empty sampling image library; and
when the empty sampling image to be detected is not added to the empty sampling image library, the image indication data set of the empty sampling image to be detected is not added to the empty sampling image library.

In another embodiment, when performing fixed noise removal on the empty sampling image to be detected by the matched empty sampling image to obtain the image to be determined, the processing unit 402 may be specifically configured to:

perform difference value operation on the empty sampling image to be detected and the matched empty sampling image to obtain a residual image as the image to be determined; or
perform difference value operation on the empty sampling image to be detected and the matched empty sampling image to obtain a residual image, and perform image noise reduction processing on the residual image to obtain the image to be determined.

In another embodiment, the processing unit 402 may be further configured to:

acquire a fingerprint image to be identified, where the fingerprint image to be identified includes user fingerprint information;
select an empty sampling image for correcting the fingerprint image to be identified from the empty sampling image library, and perform difference value operation on the fingerprint image to be identified and the empty sampling image so as to perform fixed noise removal on the fingerprint image to be identified to obtain a corrected fingerprint image to be identified; and
perform fingerprint identification on the corrected fingerprint image to be identified to obtain a fingerprint identification result.

According to one embodiment of the present disclosure, each step involved in the method shown in FIG. 1 or FIG. 2 can be performed by each unit in the image processing apparatus shown in FIG. 4. For example, the step S101 shown in FIG. 1 can be performed by the acquisition unit 401 shown in FIG. 4, and the steps S102 and S103 can be performed by the processing unit 402 shown in FIG. 4. For another example, the step S201 shown in FIG. 2 can be performed by the acquisition unit 401 shown in FIG. 4, and the steps S202-S205 can be performed by the processing unit 402 shown in FIG. 4, or the like.

According to another embodiment of the present disclosure, each unit in the image processing apparatus shown in FIG. 4 can be respectively or all combined into one or several another units, or a certain (some) unit (units) can be divided into a plurality of units with smaller functions, so that the same operation can be implemented without affecting the technical effect of the embodiments of the present disclosure. The above units are divided based on logic functions. In actual application, the function of one unit can be implemented by the plurality of units, or the functions of the plurality of units can be implemented by one unit. In other embodiments of the present disclosure, any image processing apparatus may further include other units; and in actual application, these functions also can be implemented under the assistance of other units, and can be implemented under the cooperation of the plurality of units.

According to another embodiment of the present disclosure, the image processing apparatus shown in FIG. 4 can be constructed by running a computer program (including a program code) capable of performing each step involved in the corresponding method shown in FIG. 1 or FIG. 2 on a general electronic device of a computer of a processing element and a storage element such as a central processing unit (CPU), a random access memory (RAM) and a read-only memory (ROM), and the image processing method according to the embodiments of the present disclosure can be implemented. The computer program can be recorded on, for example, a computer storage medium, and be loaded on the electronic device through the computer storage medium and run in the electronic device.

According to the embodiments of the present disclosure, the matched empty sampling image matched with the empty sampling image to be detected is selected from the empty sampling image library after the empty sampling image to be detected is acquired, so that the empty sampling image to be detected can be subjected to fixed noise removal by the matched empty sampling image to obtain the image to be determined, the fixed signal (that is, fixed noise) in the acquire an empty sampling image to be detected can be removed, and the image to be determined does not include the fixed signal; and the fixed signal in the matched empty sampling image can be closer to the fixed signal in the empty sampling image to be detected, so that the accuracy of the image to be determined can be improved. Then correspondingly, when the image to be determined has no shading, the empty sampling image to be detected is added to the empty sampling image library; and/or when the image to be determined has shading but meets the preset condition, the empty sampling image to be detected is added to the empty sampling image library, where the empty sampling image library supports the correction of the fingerprint image. It can be seen that according to the embodiments of the present disclosure, the empty sampling image to be detected can be subjected to image processing through a matched empty sampling image matched with the empty sampling image to be detected in an empty sampling image library so as to obtain a high-accuracy image to be determined; shading detection of the empty sampling image to be detected is achieved by the image to be determined, so that an empty sampling image without shading or with a small shading signal (that is, an empty sampling image to be detected when the image to be determined has no shading and/or the image to be determined has shading but meets a preset condition) is acquired, and the empty sampling image library is updated; then the empty sampling image in the empty sampling library may be the empty sampling image without shading or with the small shading signal; and the empty sampling image library supports the correction of the fingerprint image, so that the correction effect of the fingerprint image can be improved by the empty sampling image in the empty sampling image library, and the influence of the shading signal on the fingerprint image in the process of removing fixed noise is reduced, thereby improving the accuracy of fingerprint identification.

Based on the description of the method embodiment and the apparatus embodiment, the exemplary embodiment of the present disclosure further provides an electronic device, including: one or more processors, and one or more memories in communication connection with one or more processors. The one or more memory stores a computer program executable by the one or more processors, and the computer program is used to cause the electronic device to perform the method according to the embodiments of the present disclosure when being executed by the one or more processors.

The exemplary embodiment of the present disclosure further provides a chip. The chip is located in the electronic device, and the chip is configured to perform the method according to the embodiments of the present disclosure.

The exemplary embodiment of the present disclosure further provides a non-transitory computer-readable storage medium storing computer programs, where the computer programs are used to cause the computer to perform the method according to the embodiments of the present disclosure when being executed by the process of the computer.

The exemplary embodiment of the present disclosure further provides a computer program, including a computer program, where when the computer program is used to cause the computer to perform the method according to the embodiments of the present disclosure when being executed by the processor of the computer.

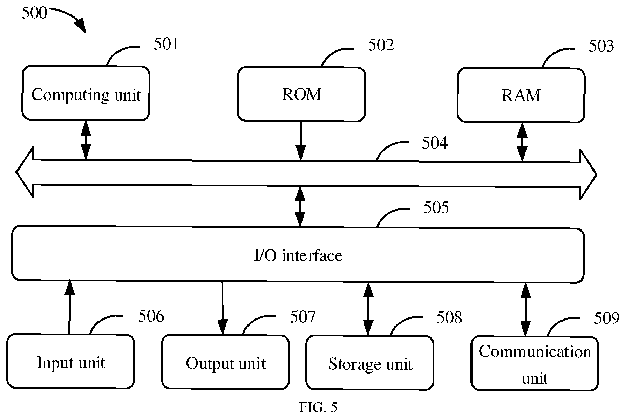

Referring to FIG. 5, a structural block diagram of an electronic device 500 that can serve as a server or a client of the present disclosure is now described, which is an example of a hardware device that can be applied to various aspects of the present disclosure. The electronic device is intended to represent various forms of digital electronic computer devices, such as a laptop computer, a desktop computer, a workstation, a personal digital assistant, a server, a blade server, a mainframe computer and other suitable computers. The electronic device may further represent various forms of mobile apparatuses, such as a personal digital assistant, a cellular phone, a smartphone, a wearable device and other similar computing apparatuses. The components shown herein, their connections and relationships and their functions are merely examples, and are not intended to limit the implementation of the present disclosure described and/or required herein.

As shown in FIG. 5, the electronic device 500 includes a computing unit 501, which may perform various appropriate actions and processing according to a computer program stored in a read-only memory (ROM) 502 or a computer program loaded from a storage unit 508 to a random access memory (RAM) 503. The RAM 503 may further store various programs and data required for the operation of the electronic device 500. The computing unit 501, the ROM 502, and the RAM 503 are connected to each other through a bus 504. An input/output (I/O) interface 505 is also connected to the bus 504.

A plurality of components in the electronic device 500 are connected to the I/O interface 505, and include: an input unit 506, an output unit 507, a storage unit 508 and a communication unit 509. The input unit 506 may be any type of device capable of inputting information to the electronic device 500. The input unit 506 can receive input digit or character information, and generate a key signal input related to user settings and/or function control of the electronic device. The output unit 507 may be any type of device capable of presenting information, and may include, but is not limited to, a display, a speaker, a video/audio output terminal, a vibrator, and/or a printer. The storage unit 508 may include, but is not limited to, a magnetic disk and an optical disc. The communication unit 509 allows the device 500 to exchange information/data with other devices via a computer network such as the Internet and/or various telecommunications networks, and may include, but is not limited to, a modem, a network interface card, an infrared communication device, a wireless communication transceiver and/or a chipset, for example, a Bluetooth TM device, a WiFi device, a WiMax device, a cellular communication device, and/or the like.

The computing unit 501 may be various general-purpose and/or special-purpose processing assemblies with processing and computing capabilities. Some examples of the computing unit 501 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller and the like. The computing unit 501 performs the various methods and processing described above. For example, in some embodiments, the image processing method may be implemented as a computer software program, which is tangibly included in a machine-readable medium, such as the storage unit 508. In some embodiments, a part or all of the computer program may be loaded and/or installed onto the electronic device 500 via the ROM 502 and/or the communication unit 509. In some embodiments, the computing unit 501 may be configured, by any other suitable means (for example, by means of firmware), to perform the image processing method.

Program codes used to perform the method of the present disclosure can be written in any combination of one or more programming languages. These program codes may be provided for a processor or a controller of a general-purpose computer, a special-purpose computer, or other programmable data processing apparatuses, such that when the program codes are executed by the processor or the controller, the functions/operations specified in the flowcharts and/or block diagrams are implemented. The program codes may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may include or store a program for use by an instruction execution system, apparatus or device, or for use in combination with the instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

As used therein, the terms "machine-readable medium" and "computer-readable medium" refer to any computer program products, devices, and/or apparatuses (such as magnetic disks, optical disks, memories, and programmable logic apparatuses (PLDs)) used for providing the machine instructions and/or data to the programmable processor, and include machine-readable mediums that receive the machine instructions which are taken as machine-readable signals. The term "machine-readable signal" refers to any signal used for providing the machine instructions and/or data to the programmable processor.

To provide interaction with a user, the systems and technologies described herein may be implemented in a computer, the computer is provided with: a display apparatus (such as a cathode ray tube (CRT) or a liquid crystal display (LCD) monitor) used for displaying information to the user; and a keyboard and a pointing apparatus (such as a mouse or a trackball), and the user may provide input to the computer through the keyboard and the pointing apparatus. Other types of apparatuses may also be used for providing interaction with the user; for example, feedback provided to the user may be sensory feedback in any form (such as visual feedback, auditory feedback, or tactile feedback); and the input of the user may be received in any form (including vocal input, speech input, or tactile input).

The systems and technologies described herein may be implemented in a computing system (for example, as a data server) including a background component, or a computing system (for example, an application server) including a middleware component, or a computing system (for example, a user computer with a graphical user interface or a web browser through which the user may interact with the implementation manners of the systems and technologies described herein) including a front-end component, or a computing system including any combination of the background component, the middleware component, or the front-end component. The components of the system may be connected with each other through digital data communication (for example, a communication network) in any form or medium. Examples of the communication network include: a local area network (LAN), a wide area network (WAN), and the Internet.

The computer system may include a client and a server. The client and the server are generally far away from each other and usually interact through the communications network. A relationship between the client and the server is generated by computer programs running in respective computers and having a client-server relationship with each other.

Furthermore, it should be understood that the above is only a preferred embodiment of the present disclosure, and certainly, the scope of rights of the present disclosure cannot be limited based on this. Therefore, equivalent changes made based on the claims of the present disclosure still fall within the scope encompassed by the present disclosure.

**Claims**

1.  An image processing method, comprising:

    acquiring an empty sampling image to be detected;
    selecting a matched empty sampling image matched with the empty sampling image to be detected from an empty sampling image library, and performing fixed noise removal on the empty sampling image to be detected by the matched empty sampling image to obtain an image to be determined; and
    when the image to be determined has no shading, adding the empty sampling image to be detected to the empty sampling image library; and/or when the image to be determined has shading but meets a preset condition, adding the empty sampling image to be detected to the empty sampling image library, where the empty sampling image library supports the correction of a fingerprint image.

2.  The method according to claim 1, wherein the selecting a matched empty sampling image matched with an empty sampling image to be detected from an empty sampling image library comprises:

    determine the image indication data set of the empty sampling image to be detected, select M target empty sampling images from the empty sampling image library, and determine the image indication data set of each target empty sampling image in the M target empty sampling images, where the image indication data set of one image comprises at least one of the following: an image grayscale matrix of a corresponding image, an acquisition frequency of the corresponding image, an acquisition temperature of the corresponding image, acquisition time of the corresponding image and flight time of the corresponding image, M is a positive integer, the acquisition frequency of the corresponding image is a signal emission frequency of an ultrasonic signal for generating the image and the flight time of the corresponding image is signal flight time of the ultrasonic signal for generating the image;
    respectively compute the similarity between the image indication data set of the empty sampling image to be detected and the image indication data set of each target empty sampling image, where the similarity between the image indication data set of the empty sampling image to be detected and the image indication data set of one target empty sampling image is used to indicate the similarity between the empty sampling image to be detected and the corresponding target empty sampling image; and
    based on the similarity between the empty sampling image to be detected and each target empty sampling image, take the target empty sampling image with the greatest similarity to the empty sampling image to be detected in the M target empty sampling images as the matched empty sampling image matched with the empty sampling image to be detected.

3. The method according to claim 2, wherein the respectively calculating the similarity between an image indication data set of the empty sampling image to be detected and an image indication data set of each target empty sampling image comprises:

for any target empty sampling image of the M target empty sampling images and for the any image indication data in the image indication data set of any target empty sampling image, determine a similarity computing method corresponding to any image indication data of the any target empty sampling image;

according to the similarity computing method and based any image indication data of the any target empty sampling image and the image indication data of the empty sampling image to be detected, compute the similarity under any image indication data of the any target empty sampling image so as to obtain the similarity under each image indication data of the any target empty sampling image, where the similarity under any image indication data of the any target empty sampling image refers to the similarity between any image indication data of the any target empty sampling image and the image indication data of the empty sampling image to be detected, and the type which the image indication data of the empty sampling image to be detected belongs to is the same as the type which any image indication data of the any target empty sampling image belongs to; and

perform weighted summation on the similarity under each image indication data of the any target empty sampling image to obtain the similarity between the image indication data set of the empty sampling image to be detected and the image indication data set of the any target empty sampling image.

4. The method according to claim 2, wherein the selecting M target empty sampling images from the empty sampling image library comprises:

add each empty sampling image in the empty sampling image library to the M target empty sampling images, so that the M target empty sampling images comprise each empty sampling image in the empty sampling image library; or

for any empty sampling image in the empty sampling image library, determine at least one image indication data from the image indication data set of the any empty sampling image; and if the difference value between each image indication data of the at least one image indication data and the corresponding image indication data of the empty sampling image to be detected is less than a corresponding preset difference threshold, add the any empty sampling image to the M target empty sampling images so as to obtain the M target empty sampling images.

5. The method according to any one of claims 1 to 4, further comprising:

perform image classification on the image to be determined to obtain a shading category of the image to be determined, where the shading category is any one of the following: a category having no shading and a category having shading, the shading comprises at least one of the following: fingerprint, a water drop and dirt;

if the shading category is the category having no shading, determine that the image to be determined has no shading; and

if the shading category is the category having shading, determine that the image to be determined has shading.

6. The method according to claim 5, wherein the category having shading comprises at least one of the following: a fingerprint category, a water drop category and a dirt category; and the method further comprises:

if the shading category is the fingerprint category in the category having shading, determine that the image to be determined does not meet the preset condition;

if the shading category is the water drop category or dirt category in the category having shading, determine foreign matter indication information of the image to be determined; if the foreign matter indication information is less than a preset indication threshold, determine that the image to be determined meets the preset condition; and if the foreign matter indication information is greater than or equal to the preset indication threshold, determine that the image to be determined does not meet the preset condition.

7. The method according to claim 6, wherein the foreign matter indication information comprises at least one of the following: a foreign matter area and a signal intensity of a region where the foreign matter is located, the foreign matter comprising a water drop and/or dirt.

8. The method according to claim 5, wherein the shading category is obtained by performing image classification through a shading detection and classification model; the shading detection and classification model is a convolutional neural network; and the performing image classification on the image to be determined to obtain the shading category of the image to be determined comprises:

perform normalization processing on the image to be determined to obtain a normalized image to be determined; and
call the shading detection and classification model to perform image classification on the normalized image to be determined so as to obtain the shading category of the image to be determined.

9. The method according to any one of claims 1 to 4, further comprising:

determine an empty sampling image to be removed from the empty sampling image library when detecting the removal requirement for the empty sampling image library; and
remove the empty sampling image to be removed from the empty sampling image library.

10. The method according to claim 9, further comprising:

when the empty sampling image to be detected is added to the empty sampling image library, determine an image gradient under the empty sampling image to be detected by the image to be determined, and add the image gradient under the empty sampling image to be detected to the empty sampling image library; and
when the empty sampling image to be detected is not added to the empty sampling image library, the image gradient under the empty sampling image to be detected is not calculated.

11. The method according to claim 10, wherein the determining an empty sampling image to be removed from the empty sampling image library comprises:

determine the adding time of each empty sampling image in the empty sampling image library and take the empty sampling image with the earliest adding time in the empty sampling image library as an empty sampling image to be removed; or
determine the image gradient under each empty sampling image and select the empty sampling image to be removed from the empty sampling image library based on the image gradient under each empty sampling image, where the image gradient under the empty sampling image to be removed is greater than the image gradient under the empty sampling image except the empty sampling image to be removed in the empty sampling image library, or the image gradient under the empty sampling image to be removed is empty, and the image gradient under the initial empty sampling image in the empty sampling image library is empty.

12. The method according to any one of claims 1 to 4, further comprising:

when the empty sampling image to be detected is added to the empty sampling image library, add the image indication data set of the empty sampling image to be detected to the empty sampling image library; and
when the empty sampling image to be detected is not added to the empty sampling image library, the image indication data set of the empty sampling image to be detected is not added to the empty sampling image library.

13. The method according to any one of claims 1 to 4, wherein the performing fixed noise removal on the empty sampling image to be detected by the matched empty sampling image to obtain an image to be determined comprises:

perform difference value operation on the empty sampling image to be detected and the matched empty sampling image to obtain a residual image as the image to be determined; or
perform difference value operation on the empty sampling image to be detected and the matched empty sampling image to obtain a residual image, and perform image noise reduction processing on the residual image to obtain the image to be determined.

14. The method according to any one of claims 1 to 4, further comprising:

acquire a fingerprint image to be identified, where the fingerprint image to be identified comprises user fingerprint information;
select an empty sampling image for correcting the fingerprint image to be identified from the empty sampling image library, and perform difference value operation on the fingerprint image to be identified and the empty sampling image so as to perform fixed noise removal on the fingerprint image to be identified to obtain a corrected fingerprint image to be identified; and

perform fingerprint identification on the corrected fingerprint image to be identified to obtain a fingerprint identification result.

15. An image processing apparatus, comprising:

an acquisition unit, configured to acquire an empty sampling image to be detected;
a processing unit, configured to select a matched empty sampling image matched with the empty sampling image to be detected from an empty sampling image library, and perform fixed noise removal on the empty sampling image to be detected by the matched empty sampling image to obtain an image to be determined; and
the processing unit, further configured to: when the image to be determined has no shading, add the empty sampling image to be detected to the empty sampling image library; and/or when the image to be determined has shading but meets a preset condition, add the empty sampling image to be detected to the empty sampling image library, where the empty sampling image library supports the correction of a fingerprint image.

16. A chip, located in an electronic device, and configured to perform the method according to any one of claims 1 to 14.

17. An electronic device, comprising:

one or more processors; and
one or more memories for storing programs,
wherein the programs comprise instructions, and when the instructions are executed by the one or more processors, the one or more processors perform the method according to any one of claims 1 to 14.

18. A non-transitory computer-readable storage medium storing computer instructions, wherein the computer instructions are used to cause a computer to perform the method according to any one of claims 1 to 14.

An empty sampling image to be detected is acquired — S101

A matched empty sampling image matched with the empty sampling image to be detected is selected from an empty sampling image library, and the empty sampling image to be detected is subjected to fixed noise removal by the matched empty sampling image to obtain an image to be determined — S102

When the image to be determined has no shading, the empty sampling image to be detected is added to the empty sampling image library; and/ or when the image to be determined has shading but meets a preset condition, the empty sampling image to be detected is added to the empty sampling image library, where the empty sampling image library supports the correction of the fingerprint image — S103

FIG. 1

An empty sampling image to be detected is acquired — S201

A matched empty sampling image matched with the empty sampling image to be detected is selected from an empty sampling image library, and the empty sampling image to be detected is subjected to fixed noise removal by the matched empty sampling image to obtain an image to be determined — S202

When the image to be determined has no shading, the empty sampling image to be detected is added to the empty sampling image library; and/ or when the image to be determined has shading but meets a preset condition, the empty sampling image to be detected is added to the empty sampling image library, where the empty sampling image library supports the correction of the fingerprint image — S203

When a removal requirement for the empty sampling image library is detected, an empty sampling image to be removed is determined from the empty sampling image library — S204

The empty sampling image to be removed is removed from the empty sampling image library — S205

FIG. 2

Start

S302 — Acquire an empty sampling image to be detected

S301 — Construct an empty sampling image library

S303 — Acquire a matched empty sampling image through a base correction module, and the empty sampling image to be detected is subjected to fixed noise removal by the matched empty sampling image to obtain the image to be determined

S304 — Perform image classification on the image to be determined through a convolutional network module to obtain the shading category of the image to be determined

S305 — Does it include a foreign matter?

No

S306 — Add the empty sampling image to be detected to the empty sampling image library through the empty sampling image library updating module

Yes

End

FIG. 3

401 — Acquisition unit

402 — Processing unit

Image processing apparatus

FIG. 4

500

501
Computing unit

502
ROM

503
RAM

504

505
I/O interface

506
Input unit

507
Output unit

508
Storage unit

509
Communication unit

FIG. 5

# INTERNATIONAL SEARCH REPORT

| International application No. |
|---|
| **PCT/IB2024/058958** |

## A. CLASSIFICATION OF SUBJECT MATTER

*G06F 16/583 (2019.01)*    *G06T 5/70 (2024.01)*    *G06V 40/12 (2022.01)*

According to International Patent Classification (IPC)

## B. FIELDS SEARCHED

Minimum documentation searched (classification system followed by classification symbols)

G06F, G06T, G06V

Documentation searched other than minimum documentation to the extent that such documents are included in the fields searched

Electronic data base consulted during the international search (name of data base and, where practicable, search terms used)

FAMPAT: calibrate, fingerprint image, match, base image, background image, filter noise, moire, condition, particle, 校正, 指纹图像, 匹配, 空采图像, 背景图像, 去噪, 底纹, 条件, 异物 and similar keywords

## C. DOCUMENTS CONSIDERED TO BE RELEVANT

| Category* | Citation of document, with indication, where appropriate, of the relevant passages | Relevant to claim No. |
|---|---|---|
| X | US 2020/0257875 A1 (HALL D. et al.), 13 August 2020, non-Chinese original document, paragraphs [0036]-[0042] and [0059]-[0160], and figures 8, 9, 11A, 11B and 13-22 | 1-18 |
| A | TW 202338662 A (CHIPONE TECHNOLOGY (BEIJING) CO., LTD.), 01 October 2023, entire document | - |

☒ Further documents are listed in the continuation of Box C.      ☒ See patent family annex.

| *   Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&" document member of the same patent family |
| "P"   document published prior to the international filing date but later than the priority date claimed | |

| Date of the actual completion of the international search | Date of the issuance of the international search report |
|---|---|
| 05 November 2024 | 08 November 2024 |

| Name and mailing address of the ISA/SG | Authorized officer |
|---|---|
| **Intellectual Property Office of Singapore**<br>1 Paya Lebar Link, #11-03<br>PLQ 1, Paya Lebar Quarter<br>Singapore 408533<br>E-mail: pct@ipos.gov.sg | LIN, Yonghua<br><br>IPOS Telephone No. (+65) 6339 8616 |

Form PCT/ISA /210 (second sheet) (July 2022)

## INTERNATIONAL SEARCH REPORT

| | International application No. |
|---|---|
| | **PCT/IB2024/058958** |

**C (Continuation).      DOCUMENTS CONSIDERED TO BE RELEVANT**

| Category* | Citation of document, with indication, where appropriate, of the relevant passages | Relevant to claim No. |
|---|---|---|
| A | CN 110348425 A (BEIJING MEGVII TECHNOLOGY CO., LTD.), 18 October 2019, entire document | - |
| A | CN 106203365 A (ZHEJIANG WINSIGHT TECHNOLOGY CO., LTD.), 07 December 2016, entire document | - |

Form PCT/ISA /210 (continuation of second sheet (1)) (July 2022)

## INTERNATIONAL SEARCH REPORT
Information on patent family members

International application No.

**PCT/IB2024/058958**

*Note: related known patent family members of the patent documents referred to by this international search report are listed in this annex. This authority only provides information on the related patent family members, and assumes no responsibility for the details of the patents.*

| Patent Documents referred in the Report | Publication Date/Announcement Date (day/month/year) | Patent Family | Publication Date/Announcement Date (day/month/year) |
|---|---|---|---|
| US 2020/0257875 A1 | 13/08/2020 | None | |
| TW 202338662 A | 01/10/2023 | None | |
| CN 110348425 A | 18/10/2019 | None | |
| CN 106203365 A | 07/12/2016 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2024101782870